# EUROPÄISCHE PATENTSCHRIFT

(11) **EP 1 983 329 B1**
(45) Veröffentlichungstag und Bekanntmachung des Hinweises auf die Patenterteilung: **12.05.2010**
(21) Anmeldenummer: 08004997.6
(22) Anmeldetag: 18.03.2008
(51) Int. Cl.: G01N 21/59, B60S 1/08

(54) **Optoelektronische Sensoreinrichtung**
Opto-electronic sensor device
Dispositif de capteur opto-électronique

(30) Priorität: 22.03.2007 DE 102007013688
(43) Veröffentlichungstag der Anmeldung: 22.10.2008
(73) Patentinhaber: odelo GmbH, 71409 Schwaikheim (DE)
(72) Erfinder: Mack, Bernd, 73630 Remshalden (DE)
(74) Vertreter: Kaufmann, Ursula Josefine

(56) Entgegenhaltungen:
- EP-A- 1 087 221
- EP-A- 1 621 426
- DE-A1- 19 951 831
- ROBEL W ET AL: "SOME SAMPLES FOR THE DIMENSION OF THE DIAMETER ARE SHOWN IN THE NEXT TABLE:" ADVANCED MICROSYSTEMS FOR AUTOMOTIVE APPLICATIONS, SPRINGER, DE, 1. Januar 1999 (1999-01-01), Seiten 154-156, XP000937949

## Beschreibung

Die Erfindung betrifft eine optoelektronische Sensoreinrichtung gemäß dem Oberbegriff des Patentanspruchs 1. Sie ist anwendbar zur mittelbaren Erfassung der Transparenz einer Verschmutzungen durch Umwelteinflüsse ausgesetzten Oberfläche, insbesondere einer transparenten Abdeckung, wie etwa einer Scheibe. Darüber hinaus betrifft die Erfindung ein Verfahren gemäß dem Oberbegriff des Patentanspruchs 13.

Zur Erfassung einer Verschmutzung, wie etwa Regen, Schnee, Feuchtigkeit, Matsch, Staub und dergleichen einer Umwelteinflüssen ausgesetzten Oberfläche einer transparenten Abdeckung, wie beispielsweise einer Windschutzscheibe, einer Scheinwerferabdeckung, einer Leuchtenabdeckung, oder einer Linse oder-einer Schutzabdeckung eines Kamerasystems oder dergleichen, sind eine Vielzahl von optoelektronischen Sensoren bekannt.

Ein erstes bekanntes Messprinzip derartiger optoelektronischer Sensoren basiert auf einer Reflexion von Licht an der Umwelteinflüssen ausgesetzten, eine optische Grenzschicht zwischen Medien mit unterschiedlichen Brechungsindizes bildenden äußeren Oberfläche der Abdeckung. So wird beispielsweise bei eine automatische Ansteuerung von Scheibenwischern von Kraftfahrzeugen kontrollierenden Regensensoren ein Lichtstrahl in einem flachen Eintrittswinkel in die Windschutzscheibe gestrahlt und gemäß den optischen Gesetzen mit einem Austrittswinkel, der dem Eintrittswinkel entspricht von der optischen Grenzschicht zwischen Glas und Luft auf einen Empfänger zurück reflektiert. Tritt eine Verschmutzung durch optisch transparente Medien, wie etwa Wasser auf, wird Licht aus der Windschutzscheibe nach außen ausgekoppelt und die im Empfänger gemessene Lichtstärke verringert. Tritt eine Verschmutzung durch optisch nicht transparente Medien, wie etwa Staub auf, verändern sich die Reflexionseigenschaften der optischen Grenzschicht ebenfalls, außerdem wird Licht im Staub absorbiert, so dass die im Empfänger gemessene Lichtstärke ebenfalls verringert wird.

Ein zweites bekanntes Messprinzip arbeitet nach dem Lichtschrankenprinzip. Dabei durchtritt Licht ein- oder mehrmals die Umwelteinflüssen ausgesetzte Oberfläche einer transparenten Abdeckung, bevor es auf einen Empfänger auftrifft. Der Grad der Verschmutzung kann anhand der bekannten, ausgesandten Lichtleistung und der tatsächlich empfangenen Lichtleistung bestimmt werden. Bei optisch nicht transparenten Medien, wie etwa Staub, ist die Abnahme der empfangenen Lichtstärke proportional der Verschmutzung. Bei optisch transparenten Medien wie etwa Wasser oder Öl, kann der gemessene Verschmutzungsgrad stark variieren. So können beispielsweise Regentropfen als optische Elemente wirken und den zur Messung verwendeten Lichtstrahl umlenken bzw. aus dem vorgesehenen Strahlengang auskoppeln. Dadurch trifft im Extremfall kein Licht auf den Empfänger, wodurch eine hohe Verschmutzung ermittelt wird.

Durch EP 1 087 221 A1 ist eine optoelektronische Sensoreinrichtung bekannt, welche eine in eine Abdeckung integrierbare Testfläche aufweist. Die Testfläche ist konkav ausgebildet und Teil eines Strahlungsleiters. Die Sensoreinrichtung weist zwei Lichtquellen auf, welche Lichtstrahlen oder allgemein Prüflicht in den Strahlungsleiter einkoppeln. Der Strahlungsleiter ist derart ausgebildet, dass das Prüflicht durch die Testfläche aus- und in diese wieder eintritt und auf zwei Empfänger abgebildet wird. Durch eine Mittelwertbildung der in beiden Empfängern gemessenen Einstrahlleistungen wird der Einfluss einer Auskopplung von Prüflicht durch einen einzelnen Regentropfen auf das Messergebnis verringert.

Eine ähnliche Sensoreinrichtung ist auch aus der EP1 621 426 A1 bekannt.

Bei einer als Regensensor eingesetzten optoelektronischen Sensoreinrichtung, welche eine automatische Ansteuerung eines Scheibenwischers kontrolliert, wird bislang in Kauf genommen, dass die Ansteuerung des Scheibenwischers unabhängig von der Art der Verschmutzung und damit unabhängig von der Beeinträchtigung der Transparenz der Abdeckung durch die Verschmutzung erfolgt.

Nach dem Stand der Technik können bislang Verschmutzungen durch die Transparenz einer Oberfläche nicht beeinflussende, transparente Flüssigkeiten nicht von die Transparenz einer Oberfläche beeinträchtigenden Verschmutzungen durch nicht transparente Flüssigkeiten oder Feststoffe unterschieden werden.

Für Anwendungsfälle, bei denen die Transparenz der Abdeckung bei einer auftretenden Verschmutzung von Bedeutung ist, ist dies nicht ausreichend. Die jeweils aktuelle Transparenz zu erfassen kann beispielsweise interessant sein für eine Umwelteinflüssen ausgesetzte transparente Abdeckung, die im Strahlengang eines optoelektronischen Messgerätes angeordnet ist, bei welchem die empfangene Lichtintensität als Messgröße dient. Als Beispiel sollen hier genannt werden ein Sichtweitenmessgerät für Kraftfahrzeuge oder ein Sonnenintensitätsmessgerät, welche beispielsweise hinter einer Windschutzscheibe oder einer anderen transparenten Abdeckung in oder an der Karosserie eines Kraftfahrzeugs angebracht sein können. Eine verminderte Transparenz zu erfassen kann auch für die Gewährleistung der Sichtbarkeit beispielsweise von beleuchteten Fahrzeugleuchten aus einer bestimmten Entfernung von Interesse sein, um beispielsweise deren Lichtleistung entsprechend nachzuregeln.

Eine Aufgabe der Erfindung ist, eine optoelektronische Sensoreinrichtung, mit der die Transparenz einer Verschmutzungen durch Umwelteinflüsse ausgesetzten Abdeckung bestimmbar ist, sowie ein Verfahren zur Bestimmung der Transparenz einer Verschmutzungen durch Umwelteinflüsse ausgesetzten Oberfläche anzugeben.

Diese Aufgabe wird durch die Merkmale des Anspruchs 1 bzw. durch die Merkmale des Anspruchs 9 gelöst.

Ein erster Gegenstand der Erfindung betrifft demnach eine optoelektronische Sensoreinrichtung zur Erfassung von Verschmutzungen auf einer für einen bestimmten Wellenlängenbereich von elektromagnetischen Wellen transparenten Abdeckung, mit mindestens einer mindestens zwei Lichtstrahlen in dem entsprechenden Wellenlängenbereich aussendenden Lichtquelle, einer eine Umwelteinflüssen ausgesetzte konkave Oberfläche aufweisenden, in der Abdeckung angeordneten Testfläche, durch die die Lichtstrahlen aus- und, sofern sich keine Verschmutzung auf der Testfläche befindet, wiedereintreten, sowie mindestens einem die Einstrahlleistungen der Lichtstrahlen messenden Empfänger, auf den die Lichtstrahlen nach deren Wiedereintritt unabhängig voneinander abgebildet werden. Die erfindungsgemäße optoelektronische Sensoreinrichtung ist dadurch gekennzeichnet, dass die Testfläche an ihrer konkaven Oberfläche mindestens zwei Bereiche mit unterschiedlichen Mikrostrukturierungen aufweist. Eine erste Mikrostrukturierung ist derart ausgebildet, dass eine auf den mit der ersten Mikrostrukturierung versehenen Bereich aufgebrachte Flüssigkeit durch ihre Oberflächenspannung tropfenförmig zusammengehalten wird bzw. Tropfen bildet, wodurch im Bereich der ersten Mikrostrukturierung durch eine Verschmutzung in Form eines flüssigen, optisch transparenten Mediums eine Auskopplung eines Lichtstrahls erfolgt. Eine zweite Mikrostrukturierung ist derart ausgebildet, dass eine auf den mit der zweiten Mikrostrukturierung versehenen Bereich aufgebrachte Flüssigkeit filmartig verteilt wird, wodurch im Bereich der zweiten Mikrostrukturierung durch eine Verschmutzung in Form eines flüssigen, optisch transparenten Mediums eine Auskopplung eines Lichtstrahls vermieden wird. Die mit unterschiedlichen Mikrostrukturen versehenen Bereiche sind so auf der Testfläche angeordnet, dass in unverschmutztem Zustand der Oberfläche mindestens ein erster Lichtstrahl durch den ersten Bereich, und mindestens ein zweiter Lichtstrahl durch den zweiten Bereich aus- und Wiedereintritt. Durch Auswertung, etwa durch Vergleich der von dem oder den Empfängern gemessenen Einstrahlleistungen der beiden Lichtstrahlen kann so unabhängig davon, ob die Verschmutzung durch transparente oder nicht transparente, flüssige oder feste Medien verursacht wird, auf die Transparenz der Verschmutzungen ausgesetzten Abdeckung rückgeschlossen werden. Der Begriff Lichtstrahl umfasst hierbei jegliche Art von sich strahlenförmig gemäß den optischen Gesetzen ausbreitenden, elektromagnetischen Wellen. Als Lichtquelle kommen vorzugsweise halbleiterbasierte Strahlungsquellen zum Einsatz, welche Lichtstrahlen in einem für eine bestimmte Anwendung geeigneten Wellenlängenbereich aussenden, etwa infrarotes Licht im nahinfraroten Bereich. Als Empfänger kommen ebenfalls vorzugsweise Halbleiter zum Einsatz, wie etwa PIN (Positive Intrinsic Negative) Dioden.

Es ist erkennbar, dass die Erfindung in jedem Fall durch eine Kombination von glatten und strukturierten Oberflächen der Testfläche verwirklicht werden kann, durch die jeweils getrennt verlaufende Lichtstrahlen aus- und wiedereintreten, wodurch eine Kompensation des durch transparente Flüssigkeitstropfen verursachten Fehlers erreicht wird. Durch getrennte Auswertung unterschiedlich ausgebildeter Oberflächen ist eine eindeutige Fehlererkennung des Problemfalls Wassertropfen möglich. Bei glatten Oberflächen wird eine auf die Oberfläche aufgebrachte Flüssigkeit durch ihre Oberflächenspannung zusammengehalten, so dass sich Tropfen bilden. Diese koppeln aufgrund ihrer optischen Eigenschaften einen durch sie hindurchtretenden Lichtstrahl aus und erzeugen ein ähnliches Verhalten, wie eine durch ein optisch nicht transparentes Medium verursachte Verschmutzung. Indem die zweite Mikrostrukturierung derart ausgebildet ist, dass eine darauf aufgebrachte Flüssigkeit zu einem Film glattgezogen wird, findet dort durch optisch transparente Medien keine Auskopplung statt, so dass durch Vergleich der Lichteinstrahlleistungen der durch die erste und durch die zweite Mikrostrukturierung hindurchtretenden Lichtstrahlen auf die Transparenz der Verschmutzung bzw. auf den Einfluss der Verschmutzung auf die Transparenz der Abdeckung rückgeschlossen werden kann.

Der Begriff konkav umfasst hierbei jegliche Ausgestaltung, bei der die Testfläche in einem Querschnitt einen Bereich aufweist, der gegenüber einem umgebenden Bereich versetzt, insbesondere tieferliegend ausgebildet ist, wie etwa einem V-förmigen Einschnitt, einer sphärischen Ausnehmung oder dergleichen.

Wichtig ist hervorzuheben, dass die optoelektronische Sensoreinrichtung auch in nicht transparente Abdeckungen integrierbar ist, um eine Verschmutzung einer solchen Abdeckung durch nicht transparente Medien zu erfassen. Dies kann beispielsweise bei Anwendungen verwendet werden, welche mit außerhalb des sichtbaren Wellenlängenbereichs liegenden elektromagnetischen Wellen arbeiten, wie etwa RADAR (RAdio Detection And Ranging) Sensoren, die durch Verschmutzungen durch nicht transparente Medien beeinträchtigt werden, aber nicht zwingend hinter transparenten Abdeckungen angeordnet sein müssen. Allgemein kann die Sensoreinrichtung eine Lichtquelle nutzen, die außerhalb des für das menschliche Auge sichtbaren Wellenlängenbereichs arbeitet. Die Abdeckung selbst sowie die Testfläche müssen in einem solchen Fall für die jeweils verwendeten Wellenlängenbereich transparent, jedoch nicht zwingend im für das menschliche Auge sichtbaren Bereich transparent ausgeführt sein, etwa bei einer Verwendung einer Lichtquelle, welche Lichtstrahlen im infraroten (IR) oder ultravioletten (UV) Bereich aussendet.

Geeignete Mikrostrukturierungen sind beispielsweise durch WO 02/085520 A2 bekannt. Dort werden zur Manipulation kleiner Flüssigkeitsmengen auf Oberflächen von Chips und dergleichen Mikrostrukturierungen beschrieben, die von einer Flüssigkeit unterschiedlich stark benetzt werden. Solche Mikrostrukturierungen sind grundsätzlich geeignet, im Rahmen der vorliegenden Erfindung verwendet zu werden.

Eine vorteilhafte Ausgestaltung der optoelektronischen Sensoreinrichtung sieht vor, dass die mindestens eine zwei Lichtstrahlen aussendende Lichtquelle eine Einrichtung zur Strahlaufweitung und/oder Strahlteilung, wie beispielsweise optische Elemente wie Prismen oder teildurchlässige Spiegel umfasst.

Ebenso kann die optoelektronische Sensoreinrichtung mindestens zwei jeweils einen Lichtstrahl aussendende Lichtquellen umfassen.

Der mindestens eine die Einstrahlleistungen der Lichtstrahlen messende Empfänger umfasst vorzugsweise eine Einrichtung zur Strahlzusammenführung, wie beispielsweise optische Elemente wie Prismen oder teildurchlässige Spiegel sowie Mittel zur Unterscheidung der beiden Lichtstrahlen. Die Mittel zur Unterscheidung der beiden Lichtstrahlen können beispielsweise Mittel zum zeitlich versetzten Aussenden der beiden Lichtstrahlen umfassen. Eine Auswertung erfolgt dabei vorzugsweise im Zeitmultiplexverfahren. Ebenso ist denkbar, unterschiedliche Wellenlängenbereiche und/oder unterschiedliche Polarisationsebenen für die beiden Lichtstrahlen zu verwenden, wobei der mindestens eine Empfänger in Abhängigkeit vom Wellenlängenbereich und/oder von der Polarisationsebene voneinander unterscheidbare Messsignale ausgibt.

Besonders vorzugsweise umfasst die optoelektronische Sensoreinrichtung mindestens zwei Empfänger, auf die jeweils ein Lichtstrahl abgebildet wird.

Die erste Mikrostrukturierung kann beispielsweise als eine glatte, beispielsweise polierte oder beschichtete Oberfläche ausgebildet sein. Die zweite Mikrostrukturierung kann beispielsweise als eine mattierte oder aufgeraute Oberfläche ausgebildet sein.

Vorzugsweise ist die zweite Mikrostrukturierung durch eine feine Oberflächenstruktur unterhalb einer sich auf dem Material der Testfläche üblicherweise bei Flüssigkeitstropfen ausbildenden Tropfengröße erzeugt. Feine Strukturen unterhalb üblicher Tropfengrößen verhindern eine Tropfenbildung, wodurch die Flüssigkeit in den beispielsweise als Vertiefungen ausgebildeten Strukturen breit läuft und die Oberflächenstruktur glättet. Hierdurch wird eine Auskopplung von Lichtstrahlen an den mit der zweiten Mikrostrukturierung versehenen Bereichen der Testfläche vermieden. Vorzugsweise passt die feine Oberflächenstruktur das Erscheinungsbild der optoelektronischen Sensoreinrichtung in die Erscheinung der durch die Abdeckung gebildeten Umgebung ein. Vorteilhaft durch Nutzung eines Logos oder Schriftzuges als Struktur, oder Fortführung der Umgebungserscheinung in einer Oberflächenstruktur z.B. bei Kraftfahrzeug Leuchten der Optikstruktur oder Reflektorstruktur als außen liegende Rillen oder Wabenstruktur. Dabei können Teilflächen auch Strukturen größer üblicher Tropfengrößen aufweisen.

Gemäß einer besonders vorteilhaften Ausgestaltung der optoelektronischen Sensoreinrichtung ist die erste Mikrostrukturierung durch eine hydrophobe Nanostruktur, und die zweite Mirkostrukturierung durch eine hydrophile Nanostruktur hergestellt. Hydrophobe und hydrophile Nanostrukturen sind wesentlich dauerhafter herstellbar und unterliegen nicht wie glatte und raue Oberflächen einer ständigen, schleichenden Degeneration ihrer Oberflächeneigenschaften, wie etwa polierte Oberflächen, die auf Dauer stumpf, oder mattierte Oberflächen, die auf Dauer reflektierend werden.

Die Mikrostrukturierungen können beispielsweise durch zumindest teilweises Beschichten der Testfläche hergestellt sein. Beschichten ist ein probates und kostengünstiges Mittel um eine gewünschte Mikrostrukturierung zu erhalten.

Ebenso können die Mikrostrukturierungen durch zumindest teilweises Einprägen von feinen Oberflächenstrukturen hergestellt sein. Hierbei ist beispielsweise denkbar, als Mikrostrukturierung Logos, Symbole, Materialbezeichnungen oder -codes und dergleichen einzuprägen.

Vorzugsweise ist die Testfläche integraler Bestandteil der Abdeckung. Hierdurch entstehen keine Fehlstellen zwischen Abdeckung und Testfläche, welche die Betriebssicherheit der optoelektronischen Sensoreinrichtung, beispielsweise durch einen Feuchtigkeitseintritt beeinträchtigen können.

Alternativ kann die Testfläche Teil eines in die Abdeckung integrierbaren Strahlungsleiters sein. Hierdurch kann die optoelektronische Sensoreinrichtung unabhängig von der Abdeckung kostengünstig als Massenprodukt hergestellt werden. Darüber hinaus ist so auch eine Integration in optisch nicht transparente Abdeckungen denkbar, beispielsweise um die Verschmutzung einer Oberfläche durch optisch nicht transparente Medien erfassen zu können.

Ein zweiter Gegenstand der Erfindung betrifft ein Verfahren zur Bestimmung der Transparenz einer Verschmutzungen durch Umwelteinflüsse ausgesetzten für einen bestimmten Wellenlängenbereich elektromagnetischer Wellen transparenten Oberfläche. Das Verfahren umfasst die Verfahrensschritte:
Anordnen mindestens zweier mit unterschiedlichen Mikrostrukturierungen versehener Bereiche auf der Oberfläche, wobei eine erste Mikrostrukturierung derart ausgebildet ist, dass eine auf den mit der ersten Mikrostrukturierung versehenen Bereich aufgebrachte Flüssigkeit durch ihre Oberflächenspannung tropfenförmig zusammengehalten wird bzw. Tropfen bildet, und eine zweite Mikrostrukturierung derart ausgebildet ist, dass eine auf den mit der zweiten Mikrostrukturierung versehenen Bereich aufgebrachter Flüssigkeitstropfen zu einem Flüssigkeitsfilm verteilt;
Erzeugung mindestens zweier Lichtstrahlen mit einer Wellenlänge innerhalb des bestimmten Wellenlängenbereichs, von denen mindestens ein erster durch den ersten Bereich, und mindestens ein zweiter durch den zweiten Bereich aus- und in unverschmutztem Zustand der Oberfläche wiedereintritt,
Messung der Einstrahlleistungen der Lichtstrahlen (10, 11) unabhängig voneinander, sowie
Auswerten der Einstrahlleistungen der beiden Lichtstrahlen, wobei das Ergebnis der Auswertung eine unverschmutzte Oberfläche ist, wenn für beide Lichtstrahlen Einstrahlleistungen gemessen werden, die gegenüber jeweils zugeordneten Startwerten in unverschmutztem Zustand im Wesentlichen unverändert sind, und das Ergebnis der Auswertung eine durch eine transparente Flüssigkeit benetzte Oberfläche ist, wenn für den ersten Lichtstrahl eine gegenüber dem jeweils zugeordneten Startwert verringerte Einstrahlleistung, und für den zweiten Lichtstrahl eine gegenüber dem jeweils zugeordneten Startwert höhere Einstrahlleistung gemessen wird.

Beispielsweise kann durch Festlegung eines Schwellenwerts für eine Einstrahlleistung der Lichtstrahlen, oberhalb dem die Oberfläche als unverschmutzt gilt, Messung der Einstrahlleistungen der durch die mit unterschiedlichen Mikrostrukturierung versehenen Bereiche aus- und wiedereingetretenen Lichtstrahlen unabhängig voneinander, und Auswerten der Einstrahlleistungen der beiden Lichtstrahlen mit geringem Aufwand auf die Transparenz der Oberfläche rückgeschlossen werden, wobei das Ergebnis der Auswertung eine verschmutzte, für den verwendeten Wellenlängenbereich nicht transparente Oberfläche ist, wenn beide Einstrahlleistungen unterhalb des Schwellenwerts liegen, das Ergebnis des Vergleichs eine benetzte und für den verwendeten Wellenlängenbereich transparente Oberfläche ist, wenn die Einstrahlleistung des durch den mit der ersten Mikrostrukturierung versehenen Bereich aus- und wiedereingetretenen Lichtstrahls unterhalb, und die Einstrahlleistung des durch den mit der zweiten Mikrostrukturierung versehenen Bereich aus- und wiedereingetretenen Lichtstrahls oberhalb des Schwellenwerts liegt, und das Ergebnis der Auswertung eine unbenetzte und für den verwendeten Wellenlängenbereich transparente Oberfläche ist, wenn beide Einstrahlleistungen oberhalb des Schwellenwerts liegen.

Ein Grad für die Transparenz der Oberfläche kann durch unabhängigen Vergleich der Einstrahlleistungen der beiden Lichtstrahlen mit für die jeweiligen Bereiche geltenden Kennlinien bestimmt werden. So nimmt bei einer Verschmutzung der Oberfläche mit beispielsweise Regenwasser die Einstrahlleistung des ersten Lichtstrahls kontinuierlich ab, wohingegen die Einstrahlleistung des zweiten Lichtstrahls zumindest zu Beginn einer Benetzung zunimmt. Durch saubere, die Transparenz nicht beeinflussende Flüssigkeiten nimmt die Einstrahlleistung des ersten Lichtstrahls stetig ab und die Einstrahlleitung des zweiten Lichtstrahls zu. Durch feste Schmutzpartikel nehmen beide Einstrahlleistungen stetig ab. Diese Eigenschaften können dazu genutzt werden, mittels durch beispielsweise Laborversuche ermittelter Kennlinien anhand der gemessenen Einstrahlleistungen den Grad der Verschmutzung der Oberfläche zu bestimmen.

Das Verfahren ist vorzugsweise derart weitergebildet, dass durch eine Bestimmung der Verschmutzung bzw. der Transparenz der Oberfläche auf die Verschmutzung einer sich an die Oberfläche anschließenden Abdeckung rückgeschlossen wird.

Die Erfindung wird nachfolgend anhand eines Ausführungsbeispiels und unter Zuhilfenahme von Zeichnungen näher erläutert.

In den Zeichnungen zeigen:
- Fig. 1: eine schematische Darstellung der Funktionsweise einer optoelektronischen Sensoreinrichtung nach dem Stand der Technik in einer Seitenansicht, sowie
- Fig. 2: eine schematische Darstellung der Funktionsweise einer optoelektronischen Sensoreinrichtung gemäß der Erfindung in einer Draufsicht.

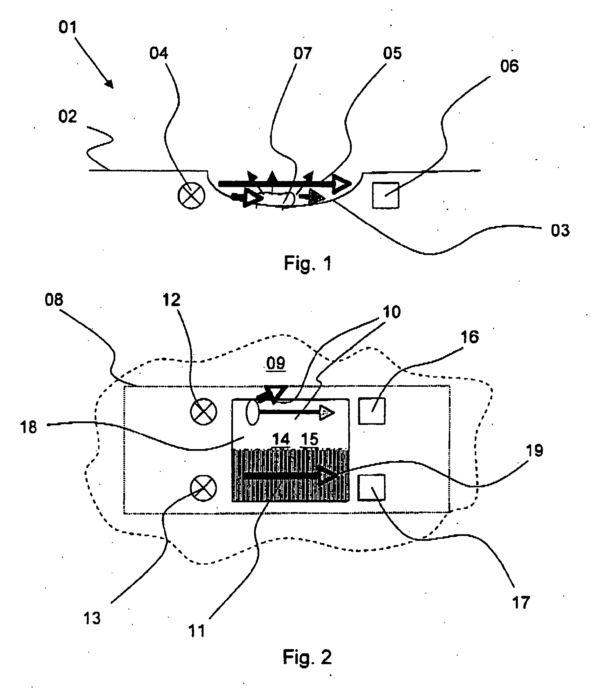

Fig. 1 zeigt eine optoelektronische Sensoreinrichtung 01, welche eine in eine Abdeckung 02 integrierte Testfläche 03 aufweist. Die Testfläche 03 ist konkav ausgebildet. Die Sensoreinrichtung 01 weist eine Lichtquelle 04 auf, welche Lichtstrahlen 05 aussendet. Die Lichtstrahlen 05 treten durch die Testfläche 03 aus- und in diese wieder ein und werden auf einem Empfänger 06 abgebildet. Ein sich auf der Testfläche 03 befindender Regentropfen 07 koppelt die Lichtstrahlen 05 teilweise aus und streut deren Lichtleistung in die Umgebung. Hierdurch wird die vom Empfänger 07 gemessene Einstrahlleistung verringert und, obgleich die Transparenz der Abdeckung 02 bzw. der Testfläche 03 durch den Regentropfen 07 nicht beeinträchtigt wird, eine Verschmutzung gemessen.

Eine in Fig. 2 dargestellte optoelektronische Sensoreinrichtung 08 zur Erfassung von Verschmutzungen auf einer transparenten Abdeckung 09 verfügt über zwei jeweils einen Lichtstrahl 10, 11 aussendenden Lichtquellen 12, 13, eine Umwelteinflüssen ausgesetzte konkave Oberfläche 14 aufweisenden, in der Abdeckung 09 angeordneten Testfläche 15, durch die die Lichtstrahlen 10, 11 aus- und zumindest in unverschmutztem Zustand der Oberfläche 14 auch wieder eintreten. Außerdem umfasst die optoelektronische Sensoreinrichtung 08 zwei die Einstrahlleistungen der Lichtstrahlen 10, 11 messende Empfänger 16, 17, auf die die Lichtstrahlen 10, 11 nach deren Wiedereintritt unabhängig voneinander abgebildet werden. Die Testfläche15 der optoelektronische Sensoreinrichtung 08 weist an ihrer konkaven Oberfläche zwei Bereiche 18, 19 mit unterschiedlichen Mikrostrukturierungen auf. Eine erste Mikrostrukturierung ist derart ausgebildet, dass eine auf den mit der ersten Mikrostrukturierung versehenen Bereich 18 aufgebrachte Flüssigkeit durch ihre Oberflächenspannung tropfenförmig zusammengehalten wird bzw. Tropfen bildet, wodurch im Bereich 18 der ersten Mikrostrukturierung durch ein optisch transparentes Medium eine Auskopplung des Lichtstrahls 10 erfolgt. Eine zweite Mikrostrukturierung ist derart ausgebildet, dass eine auf den mit der zweiten Mikrostrukturierung versehenen Bereich 19 aufgebrachte Flüssigkeit filmartig verteilt wird, wodurch im Bereich 19 der zweiten Mikrostrukturierung durch ein optisch transparentes Medium eine Auskopplung eines Lichtstrahls 11 vermieden wird. Die mit unterschiedlichen Mikrostrukturen versehenen Bereiche 18, 19 sind so auf der Testfläche 15 angeordnet, dass in unverschmutztem Zustand der Oberfläche der erste Lichtstrahl 10 durch den ersten Bereich 18, und der zweite Lichtstrahl 11 durch den zweiten Bereich 19 aus- und wiedereintritt. Durch Vergleich der von den Empfängern 16, 17 gemessenen Einstrahlleistungen der beiden Lichtstrahlen 10, 11 kann so unabhängig davon, ob die Verschmutzung durch feste oder flüssige Medien verursacht wird, auf die Transparenz der Verschmutzungen ausgesetzten Abdeckung 09 rückgeschlossen werden.

Die gewünschten unterschiedlichen Mikrostrukturen können beispielsweise durch eine als zweite Mikrostrukturierung dienende, in dem zweiten Bereich 19 der Testfläche 15 angeordnete, strukturierte, außenseitige Oberfläche, beispielsweise ähnlich einer fein strukturierten Fresnelllinse, parallele Rillen oder ein Wabenmuster ähnlich einem Reflektor und durch eine als erste Mikrostrukturierung dienende, in dem ersten Bereich 18 der Testfläche 15 angeordnete glatte Oberfläche ausgebildet sein. Solche Mikrostrukturierungen verändern das Erscheinungsbild beispielsweise von Heckleuchten eines Kraftfahrzeugs nur wenig, oder gar nicht.

Wichtig ist hervorzuheben, dass die Mikrostrukturierungen so ausgebildet werden können, dass sie beispielsweise über die komplette Lebensdauer eines Kraftfahrzeugs erhalten bleiben, ohne ihre Eigenschaften zu verlieren. Dies ist insbesondere durch eine Ausbildung der Mikrostrukturierungen als Nanostrukturen oder durch Ausbildung der Mikrostrukturierungen in Form von Strukturen im Millimeterbereich möglich.

## Patentansprüche

1. Optoelektronische Sensoreinrichtung (08) zur Erfassung von
Verschmutzungen auf einer für elektromagnetische Wellen eines bestimmten Wellenlängenbereichs transparenten Abdeckung (09), mit mindestens einer mindestens zwei Lichtstrahlen (10, 11) aussendenden Lichtquelle (12, 13), einer eine Umwelteinflüssen ausgesetzte konkave Oberfläche (14) aufweisenden, in der Abdeckung (09) angeordneten Testfläche (15), durch die die Lichtstrahlen (10, 11) aus- und wiedereintreten, sowie mindestens einem die Einstrahlleistungen der Lichtstrahlen (10, 11) messenden Empfänger (16, 17), auf den die Lichtstrahlen (10, 11) bei unverschmutzter Oberfläche (14) nach deren Wiedereintritt unabhängig voneinander abgebildet werden,
**dadurch gekennzeichnet,**
**dass** die Testfläche (15) mindestens zwei Bereiche (18, 19) mit unterschiedlichen Mikrostrukturierungen aufweist, wobei eine erste Mikrostrukturierung derart ausgebildet ist, dass eine auf den mit der ersten Mikrostrukturierung versehenen Bereich (18) aufgebrachte Flüssigkeit tropfenförmig zusammengehalten wird, und eine zweite Mikrostrukturierung derart ausgebildet ist, dass eine auf den mit der zweiten Mikrostrukturierung versehenen Bereich (19) aufgebrachte Flüssigkeit filmartig verteilt wird, wobei in unverschmutztem Zustand der Oberfläche (14) mindestens ein erster Lichtstrahl (10) durch den ersten Bereich (18), und mindestens ein zweiter Lichtstrahl (11) durch den zweiten Bereich (19) aus- und wiedereintritt, so dass durch Auswerten der Einstrahlleistungen auf die Transparenz der Verschmutzungen ausgesetzten Abdeckung (09) rückgeschlossen werden kann.

2. Optoelektronische Sensoreinrichtung nach Anspruch 1, **dadurch gekennzeichnet, dass** die mindestens eine zwei Lichtstrahlen aussendende Lichtquelle eine Einrichtung zur Strahlaufweitung und/oder Strahlteilung umfasst.

3. Optoelektronische Sensoreinrichtung nach Anspruch 1, **dadurch gekennzeichnet, dass** die optoelektronische Sensoreinrichtung mindestens zwei jeweils einen Lichtstrahl aussendende Lichtquelle umfasst.

4. Optoelektronische Sensoreinrichtung nach Anspruch 1, 2 oder 3, **dadurch gekennzeichnet, dass** der mindestens eine die Einstrahlleistungen der Lichtstrahlen (10, 11) messende Empfänger (16, 17) eine Einrichtung zur Strahlzusammenfühmng, sowie Mittel zur Unterscheidung der beiden Lichtstrahlen (10, 11) umfasst.

5. Optoelektronische Sensoreinrichtung nach Anspruch 1, 2 oder 3, **dadurch gekennzeichnet, dass** die optoelektronische Sensoreinrichtung mindestens zwei Empfänger (16, 17) umfasst, auf die jeweils ein Lichtstrahl abgebildet wird.

6. Optoelektronische Sensoreinrichtung nach einem der vorhergehenden Ansprüche, **dadurch gekennzeichnet, dass** die erste Mikrostrukturierung als eine glatte Oberfläche ausgebildet ist.

7. Optoelektronische Sensoreinrichtung nach einem der vorhergehenden Ansprüche, **dadurch gekennzeichnet, dass** die zweite Mikrostrukturierung durch eine feine Oberflächenstruktur unterhalb einer sich auf dem Material der Testfläche (15) üblicherweise bei Flüssigkeitstropfen ausbildenden Tropfengröße erzeugt ist.

8. Optoelektronische Sensoreinrichtung nach einem der Ansprüche 1 bis 5, **dadurch gekennzeichnet, dass** die erste Mikrostrukturierung durch eine hydrophobe Nanostruktur, und die zweite Mikrostrukturierung durch eine hydrophile Nanostruktur hergestellt ist.

9. Optoelektronische Sensoreinrichtung nach einem der vorhergehenden Ansprüche, **dadurch gekennzeichnet, dass** die Mikrostrukturierungen durch zumindest teilweises Beschichten der Testfläche (15) hergestellt sind.

10. Optoelektronische Sensoreinrichtung nach einem der Ansprüche 1 bis 5, **dadurch gekennzeichnet, dass** die Mikrostrukturierungen durch zumindest teilweises Einprägen einer feinen Oberflächenstruktur hergestellt sind.

11. Optoelektronische Sensoreinrichtung nach einem der vorhergehenden Ansprüche, **dadurch gekennzeichnet, dass** die Testfläche integraler Bestandteil der Abdeckung ist.

12. Optoelektronische Sensoreinrichtung nach einem der Ansprüche 1 bis 10, **dadurch gekennzeichnet, dass** die Testfläche Teil eines in die Abdeckung (09) integrierbaren Strahlungsleiters ist.

13. Verfahren zur Bestimmung der Transparenz einer Verschmutzungen durch Umwelteinflüsse ausgesetzten, für elektromagnetische Wellen eines bestimmten Wellenlängenbereichs transparenten Oberfläche (14), **gekennzeichnet durch** die Verfahrensschritte:
- Anordnen mindestens zweier mit unterschiedlichen Mikrostrukturierungen versehener Bereiche (18, 19) auf der Oberfläche (14), wobei eine erste Mikrostrukturierung derart ausgebildet ist, dass eine auf den mit der ersten Mikrostrukturierung versehenen Bereich (18) aufgebrachte Flüssigkeit tropfenförmig zusammengehalten wird, und eine zweite Mikrostrukturierung derart ausgebildet ist, dass eine auf den mit der zweiten Mikrostrukturierung versehenden Bereich (19) aufgebrachter Flüssigkeitstropfen zu einem Flüssigkeitsfilm verteilt,
- Erzeugung mindestens zweier Lichtstrahlen (10, 11), von denen mindestens ein erster **durch** den ersten Bereich, und mindestens ein zweiter **durch** den zweiten Bereich aus- und in unverschmutztem Zustand der Oberfläche (14) wiedereintritt,
- Messung der Einstrahlleistungen der Lichtstrahlen (10, 11) unabhängig voneinander, sowie
- Auswerten der Einstrahlleistungen der beiden Lichtstrahlen (10, 11), wobei das Ergebnis der Auswertung eine unverschmutzte Oberfläche (14) ist, wenn für beide Lichtstrahlen (10, 11) jeweils eine gegenüber einem jeweils zugeordneten Startwert im Wesentlichen unveränderte Einstrahlleistung gemessen wird und das Ergebnis der Auswertung eine **durch** eine transparente Flüssigkeit benetzte Oberfläche (14) ist, wenn für den ersten Lichtstrahl (10) eine gegenüber dem jeweils zugeordneten Startwert verringerte Einstrahlleistung, und für den zweiten Lichtstrahl (11) eine gegenüber dem jeweils zugeordneten Startwert höhere Einstrahlleistung gemessen wird.

14. Verfahren nach Anspruch 13, **dadurch gekennzeichnet, dass** ein Grad für die Transparenz der Oberfläche (14) durch unabhängigen Vergleich der Einstrahlleistungen der beiden Lichtstrahlen (10, 11) mit für die jeweiligen Bereiche (18, 18) geltenden Kennlinien bestimmt wird.

15. Verfahren nach Anspruch 13 oder 14, **dadurch gekennzeichnet, dass** durch eine Bestimmung der Verschmutzung bzw. der Transparenz der Oberfläche (14) auf die Verschmutzung einer sich an die Oberfläche anschließenden Abdeckung (09) rückgeschlossen wird.

## Claims

1. Optoelectronic sensor device (08) for detecting soiling on a transparent cover (09) for electromagnetic waves of a certain wavelength range, having at least one light source (12, 13) emitting at least two light beams (10, 11), a test surface (15) arranged in the cover (09) and having a concave surface (14) subjected to environmental effects, through which test surface the light beams can exit and re-enter, and at least one receiver (16, 17) measuring the irradiation powers of the light beams (10, 11) and onto which the light beams (10, 11) are imaged independently of one another after re-entry in the case of a non-soiled surface (14),
**characterized in that**
the test surface (15) has at least two areas (18, 19) with differing microstructures, where a first microstructure is designed such that a liquid applied to the area (18) provided with the first microstructure is held together in droplet form and a second microstructure is designed such that a liquid applied to the area (19) provided with the second microstructure is spread out like a fim, where in the non-soiled state of the surface (14) at least a first light beam (10) exits and re-enters through the first area (18) and at least a second light beam (11) exits and re-enters through the second area (19), so that inferences can be made about the transparency of the cover (09) subjected to soiling by evaluating the irradiation powers.

2. Optoelectronic sensor device according to Claim 1, **characterized in that** the light source emitting at least two light beams comprises a device for beam widening and/or beam division.

3. Optoelectronic sensor device according to Claim 1, **characterized in that** the optoelectronic sensor device comprises at least two light sources each emitting one light beam.

4. Optoelectronic sensor device according to Claim 1, 2 or 3, **characterized in that** the at least one receiver (16, 17) measuring the irradiation powers of the light beams (10, 11) comprises a device for beam convergence and means for distinguishing the two light beams (10, 11).

5. Optoelectronic sensor device according to Claim 1, 2 or 3, **characterized in that** the optoelectronic sensor device comprises at least two receivers (16, 17) onto which at least one light beam each is imaged.

6. Optoelectronic sensor device according to one of the preceding claims,
**characterized in that** the first microstructure is designed as a smooth surface.

7. Optoelectronic sensor device according to one of the preceding claims,
**characterized in that** the second microstructure is created by a fine surface structure below a droplet size usually forming on the material of the test surface (15) in the case of liquid droplets.

8. Optoelectronic sensor device according to one of Claims 1 to 5,
**characterized in that** the first microstructure is achieved by a hydrophobic nanostructure and the second microstructure by a hydrophilic nanostructure.

9. Optoelectronic sensor device according to one of the preceding claims,
**characterized in that** the microstructures are achieved by at least partial coating of the test surface (15).

10. Optoelectronic sensor device according to one of Claims 1 to 5,
**characterized in that** the microstructures are manufactured by at least partial embossing of a fine surface structure.

11. Optoelectronic sensor device according to one of the preceding claims,
**characterized in that** the test surface is an integral part of the cover.

12. Optoelectronic sensor device according to one of Claims 1 to 10,
**characterized in that** the test surface is part of a beam guide which can be integrated into the cover (09).

13. Method for determining the transparency of a transparent surface (14) subjected to soiling from environmental effects for electromagnetic waves of a certain wavelength range,
**characterized by** the method steps:
- arrangement of at least two areas (18, 19) provided with different microstructures on the surface (14), where a first microstructure is designed such that a liquid applied to the area (18) provided with the first microstructure is held together in droplet form, and a second microstructure is designed such that a liquid droplet applied to the area (19) provided with the second microstructure is spread out into a liquid film,
- generation of at least two light beams (10, 11) of which at least a first beam exits through the first area and at least a second light beam exits through the second area (19) and re-enters in the non-soiled state of the surface (14),
- measurement of the irradiation powers of the light beams (10, 11) independently of one another, and
- evaluation of the irradiation powers of the two light beams (10, 11), where the result of the evaluation is a non-soiled surface (14) if for each of the two light beams (10, 11) an irradiation power substantially unchanged from an assigned starting value is measured, and the result of the evaluation is a surface (14) wetted by a transparent liquid if an irradiation power reduced relative to the respectively assigned starting value is measured for the first light beam (10) and an irradiation power increased relative to the respectively assigned starting value is measured for the second light beam (11).

14. Method according to Claim 13, **characterized in that** a degree for the transparency of the surface (14) is determined by an independent comparison of the irradiation powers of the two light beams (10, 11) with characteristic curves applying for the respective areas.

15. Method according to Claim 13 or 14, **characterized in that** the soiling of a cover (09) contacting the surface is inferred by determining the soiling or transparency of the surface (14).

## Revendications

1. Dispositif capteur optoélectronique (08) permettant la détection de salissures sur un élément de recouvrement (09) transparent pour des ondes électromagnétiques d'une gamme d'ondes déterminée, avec au moins une source lumineuse (12, 13) émettant au moins deux rayons lumineux (10, 11), une surface témoin (15) disposée dans l'élément de recouvrement (09) et présentant une surface concave (14) soumise aux influences environnantes, surface témoin à travers laquelle les rayons lumineux (10, 11) sortent et entrent à nouveau, ainsi qu'au moins un récepteur (16, 17) mesurant les puissances de rayonnement des rayons lumineux (10, 11), sur lequel les rayons lumineux (10, 11) sont projetés indépendamment les uns des autres après leur rentrée si la surface (14) n'est pas sale,
**caractérisé en ce**
**que** la surface témoin (15) présente au moins deux sections (18, 19) pourvues de différentes microstructurations, une première microstructuration étant conçue de telle manière qu'un liquide appliqué sur la section (18) pourvue de la première microstructuration est maintenu sous forme de goutte, et une deuxième microstructuration étant conçue de telle manière qu'un liquide appliqué sur la section (19) pourvue de la deuxième microstructuration est réparti sous forme de film, sachant que si la surface (14) est sale, au moins un premier rayon lumineux (10) sort et rentre à travers la première section (18), et au moins un deuxième rayon lumineux (11) sort et rentre à travers la deuxième section (19), si bien que la transparence de l'élément de recouvrement (09) soumis aux salissures peut être déterminée en évaluant la puissance des rayonnements.

2. Dispositif capteur optoélectronique selon la revendication 1, **caractérisé en ce que** la source lumineuse au moins en présence émettant deux rayons lumineux comprend un dispositif d'élargissement du rayon et/ou de division du rayon.

3. Dispositif capteur optoélectronique selon la revendication 1, **caractérisé en ce que** le dispositif capteur optoélectronique comprend au moins deux sources lumineuses émettant respectivement un rayon lumineux.

4. Dispositif capteur optoélectronique selon la revendication 1, 2 ou 3, **caractérisé en ce que** le récepteur (16, 17) au moins en présence mesurant les puissances de rayonnement des rayons lumineux (10, 11) comprend un dispositif de combinaison des rayons, ainsi que des moyens de différenciation des deux rayons lumineux (10, 11).

5. Dispositif capteur optoélectronique selon la revendication 1, 2 ou 3, **caractérisé en ce que** le dispositif capteur optoélectronique comprend au moins deux récepteurs (16, 17) sur lesquels est projeté respectivement un rayon lumineux.

6. Dispositif capteur optoélectronique selon l'une des revendications précédentes, **caractérisé en ce que** la première microstructuration est conçue sous forme d'une surface lisse.

7. Dispositif capteur optoélectronique selon l'une des revendications précédentes, **caractérisé en ce que** la deuxième microstructuration est produite par une fine structure de surface au-dessous d'une taille de goutte se formant habituellement sur le matériau de la surface témoin (15) en cas de présence de gouttes de liquide.

8. Dispositif capteur optoélectronique selon l'une des revendications 1 à 5, **caractérisé en ce que** la première microstructuration est obtenue par une nanostructure hydrophobe, et la deuxième microstructuration par une nanostructure hydrophile.

9. Dispositif capteur optoélectronique selon l'une des revendications précédentes, **caractérisé en ce que** les microstructurations sont obtenues par revêtement au moins partiel de la surface témoin (15).

10. Dispositif capteur optoélectronique selon l'une des revendications 1 à 5, **caractérisé en ce que** les microstructurations sont obtenues par impression au moins partielle d'une fine structure de surface.

11. Dispositif capteur optoélectronique selon l'une des revendications précédentes, **caractérisé en ce que** la surface témoin fait partie intégrante de l'élément de recouvrement.

12. Dispositif capteur optoélectronique selon l'une des revendications 1 à 10, **caractérisé en ce que** la surface témoin fait partie d'un conducteur de rayonnement pouvant être intégré à l'élément de recouvrement (09).

13. Procédé permettant de déterminer la transparence d'une surface transparente (14) pour des ondes électromagnétiques d'une gamme d'ondes déterminée, laquelle surface est exposée aux salissures dues aux influences environnantes, **caractérisé par** les étapes suivantes :
- disposition sur la surface (14) d'au moins deux sections (18, 19) pourvues de différentes microstructurations, une première microstructuration étant conçue de telle manière qu'un liquide appliqué sur la section (18) pourvue de la première microstructuration est maintenu sous forme de goutte, et une deuxième microstructuration étant conçue de telle manière qu'un liquide appliqué sur la section (19) pourvue de la deuxième microstructuration est réparti sous forme de film,
- production d'au moins deux rayons lumineux (10, 11), parmi lesquels au moins un premier sort et entre à nouveau à travers la première section, et au moins un deuxième sort et entre à nouveau à travers la deuxième section, si la surface (14) n'est pas sale,
- mesure des puissances de rayonnement des rayons lumineux (10, 11) indépendamment l'un de l'autre, et
- évaluation des puissances de rayonnement des deux rayons lumineux (10, 11), le résultat de l'évaluation étant une surface (14) non salie si, pour les deux rayons lumineux (10,11), la puissance de rayonnement mesurée est essentiellement identique à une valeur initiale qui leur a respectivement été attribuée, et le résultat de l'évaluation étant une surface (14) humidifiée par un liquide transparent si, pour le premier rayon lumineux (10), la puissance de rayonnement mesurée est inférieure à la valeur initiale respectivement attribuée et si, pour la deuxième rayon lumineux (11), la puissance de rayonnement mesurée est supérieure à la valeur initiale respectivement attribuée.

14. Procédé selon la revendication 13, **caractérisé en ce qu'**un degré de transparence de la surface (14) est déterminé par comparaison indépendante des puissances de rayonnement des deux rayons lumineux (10, 11) avec les caractéristiques s'appliquant à chacune des sections (18, 19).

15. Procédé selon la revendication 13 ou 14, **caractérisé en ce que** la salissure d'un élément de recouvrement (09) appliqué sur la surface est déduite de la détermination de la salissure ou de la transparence de la surface (14).
